# EUROPEAN PATENT SPECIFICATION

(11) **EP 1 708 225 B1**
(45) Date of publication and mention of the grant of the patent: **20.08.2008**
(21) Application number: 06111824.6
(22) Date of filing: 28.03.2006
(51) Int. Cl.: H01J 1/304, H01J 29/04, H01J 31/12, H01J 9/02

(54) **Electron emission device and method for manufacturing the same**
Elektronenemissionsvorrichtung und Verfahren zu deren Herstellung
Dispositif d'émission électronique et procédé de fabrication de celui-ci

(30) Priority: 31.03.2005 KR 20050026988
(43) Date of publication of application: 04.10.2006
(73) Proprietor: Samsung SDI Co., Ltd., Suwon-si Gyeonggi-do (KR)
(72) Inventor: Hong, Su-Bong Legal & IP Team,Samsung SDI Co.,LTD., Kyunggi-do (KR); Lee, Chun-Gyoo Legal & IP Team,Samsung SDI Co.,LTD, Kyunggi-do (KR); Lee, Sang-Jo Legal & IP Team,Samsung SDI Co.,LTD., Kyunggi-do (KR); Jeon, Sang-Ho Legal & IP Team,Samsung SDI Co.,LTD., Kyunggi-do (KR); Ahn,Sang-Hyuck Legal & IP Team,Samsung SDI Co,LTD., Kyunggi-do (KR)
(74) Representative: Hengelhaupt, Jürgen

(56) References cited:
- EP-A- 1 542 258
- US-A- 5 536 993
- US-A- 5 786 659
- US-A1- 2005 040 752
- US-A1- 2005 052 108

## Description

### BACKGROUND OF THE INVENTION

Generally, electron emission devices are classified into those using hot cathodes as an electron emission source, and those using cold cathodes as the electron emission source. There are several types of cold cathode electron emission devices, including a field emitter array (FEA) type, a metal-insulator-metal (MIM) type, a metal-insulator-semiconductor (MIS) type, and a surface conduction emitter (SCE) type.

The FEA type electron emission device is based on the principle that when a material having a low work function or a high aspect ratio is used as an electron emission source, electrons are easily emitted from the electron emission source when an electric field is applied thereto under the vacuum atmosphere. A sharp-pointed tip structure based on molybdenum Mo or silicon Si, or a carbonaceous material, such as carbon nanotube, graphite and diamond-like carbon, has been developed to be used as an electron emission region.

With the common FEA type electron emission device, cathode electrodes, an insulating layer, and gate electrodes are sequentially formed on a first substrate, and openings are formed at the gate electrodes and the insulating layer. Electron emission regions are formed over the cathode electrodes within the openings. Phosphor layers and an anode electrode are formed on a surface of a second substrate facing the first substrate.

In operation, when scan driving voltages are applied to any one of the cathode and the gate electrodes, and data driving voltages are applied to the other electrode, electric fields are formed around the electron emission regions at the pixels where the voltage difference between the two electrodes exceeds the threshold value. Electrons are emitted from those electron emission regions. The emitted electrons are attracted by the high voltage applied to the anode electrode (a positive voltage of several hundreds to several thousands volts), and collide against the corresponding phosphor layers, thereby light-emitting them.

However, with this type of electron emission device, when electrons are emitted from the electron emission regions, some electrons are non-straightly diffused even though most of the electrons straightly proceed toward the corresponding phosphor layers. The diffused electrons land on the black layers disposed between the phosphor layers, and do not serve to emit the visible rays. Furthermore, the diffused electrons land on incorrect color phosphor layers at the neighboring pixels, and light-emit them so that the image quality is deteriorated.

As the cathode and the gate electrodes have an internal resistance, they may induce voltage drop and signal distortion during the driving of the electron emission device. Particularly when the cathode electrodes are formed with a transparent oxide layer such as indium tin oxide (ITO), they involve higher resistance compared to the case where they are formed with a metallic conductive layer such as aluminum (Al) or silver (Ag).
When the voltage drop and the signal distortion are made, the electric fields applied to the electron emission regions are differentiated per the pixels even when the same driving voltage is applied to all the pixels. As a result, the electron emission uniformity per pixel is deteriorated, and in a serious case, a distinct luminance difference is observed along the length of the cathode or the gate electrodes.

Document US 5,536,993 discloses a flat panel display, wherein an emitter plate of the field emission flat panel display device includes a layer of a resistive material and a mesh-like structure of an electrically conductive material. A conductive plate is also formed on top of resistive coating within the spacing defined by the meshes of the conductor. Microtip emitters in the shape of cones, are formed on the upper surface of the conductive plate. Also disclosed is an arrangement of emitter clusters comprising conductive plates having a plurality of microtip emitters formed thereon or spaced therefrom by a thin layer of resistive material, each cluster adjacent and laterally spaced from a stripe conductor by a region of a resistive material. The conductive stripes are substantially parallel to each other, are spaced from one another by two conductive plates, and are joined by bus regions outside the active area of the display. Document US 5,786.659 discloses a field emission type electron source capable of permitting a resistance value between a cathode wiring and each of emitter cones to be set at substantially the same level and increasing packaging density of the emitter cones. The electron source includes stripe-like cathode wirings arranged on an insulating substrate. The cathode wirings each are formed with a plurality of windows, so that a plurality of island-like cathode conductors and resistance layers different in resistance value from each other are formed separate from the cathode wiring. Then, a resistance layer, an insulating layer and a gate electrode are formed thereon. The gate electrode and insulating layer are formed with apertures in a manner to be common to both, in which the emitter cones are arranged, resulting in emission of electrons from the emitter cones of each group unit being rendered uniform.

### SUMMARY OF THE INVENTION

An electron emission device according to the present invention includes a first substrate; a second substrate facing the first substrate and separated therefrom by a predetermined distance; cathode electrodes, each comprising first electrodes formed on the first substrate, and second electrodes spaced apart from the first electrodes; electron emission regions formed on the second electrodes; resistance layers interconnecting the first electrodes and the second electrodes while surrounding the electron emission regions; an insulating layer positioned over the resistance layers and the cathode electrodes; and gate electrodes formed over the insulating layer.

The first electrodes may be provided as a pair of first electrodes, and the second electrodes may be disposed between the pair of first electrodes. In one embodiment, the second electrodes are located at pixel regions defined on the first substrate, and the electron emission regions are formed on the second electrodes. In another embodiment, two or more of the second electrodes are provided at each pixel region defined on the first substrate, and one ore more of the electron emission regions are formed on each second electrodes.

The second electrodes may be formed with a transparent conductive oxide layer and the first electrodes may have a specific resistance lower than that of the second electrodes.

In one embodiment, the first electrodes are formed with a material selected from the group consisting of aluminum, molybdenum, silver, titanium, tungsten, chromium, and platinum. In another embodiment, the resistance layers are formed at pixel regions defined on the first substrate in one to one correspondence. That is, the resistance layers are separately provided at respective pixel regions defined on the first substrate. The resistance layers may also contact a lateral surface of the electron emission regions, and may have a specific resistance of 10⁶-10¹²Ωcm.

The electron emission regions may be formed with a material selected from the group consisting of carbon nanotube, graphite, graphite nanofiber, diamond, diamond-like carbon, C₆₀, and silicon nanowire.

In one embodiment, the electron emission device also includes focusing electrodes positioned over the gate electrodes and being electrically insulated from the gate electrodes, and phosphor layers formed on a surface of the second substrate facing the first substrate, and an anode electrode formed on a surface of the phosphor layers.

A thickness of the resistance layers may be larger than that of the electron emission regions such that a top surface of the resistance layers is placed on a plane higher than a top surface of the electron emission regions.

A method of manufacturing an electron emission device according to the present invention includes (a) forming a pair of first electrodes on a first substrate with a metallic material, and forming second electrodes between the pair of first electrodes with a transparent conductive oxide material to thereby form a cathode electrode; (b) forming a resistance layer on the pair of first electrodes and the second electrodes, and forming openings in the resistance layer such that the openings partially expose the surface of the second electrodes; (c) forming an insulating layer and gate electrodes on the cathode electrodes and the resistance layers such that the insulating layer and gate electrodes have openings, respectively; and (d) forming electron emission regions on the second electrodes within the openings in the resistance layers.

The second electrodes may be formed with ITO, and the first electrodes may be formed with a material selected from the group consisting of aluminum, molybdenum, silver, titanium, tungsten, chromium, and platinum.

The forming the electron emission regions, in one embodiment, includes (a) applying a mixture of an electron emission material and a photosensitive material onto an entire surface of the first substrate; (b) illuminating the mixture with ultraviolet rays from a backside of the first substrate to harden the mixture filled within the openings in the resistance layers; and (c) thereafter, removing the mixture that is not hardened through developing, and drying and firing a remaining mixture.

A thickness of the electron emission regions may be thinner than that of the resistance layers such that a top surface of the resistance layers is placed on a plane higher than a top surface of the electron emission regions.

### BRIEF DESCRIPTION OF THE DRAWINGS

FIG. 1 is a partial exploded perspective view of an electron emission device according to a first embodiment of the present invention.
FIG. 2 is a partial sectional view of the electron emission device according to the first embodiment of the present invention.
FIG. 3 is a partial plan view of the electron emission device according to another embodiment of the present invention, illustrating variants of the second electrode and the electron emission region thereof.
FIG. 4 is a schematic view of an electron emission device according to Comparative Example 1, simulating the trajectories of emitting electrons.
FIG. 5 is a schematic view of an electron emission device according to Example 1, simulating the trajectories of emitting electrons.
FIG. 6 is a partial sectional view of an electron emission device according to another embodiment of the present invention.
FIG. 7A illustrates a first phase of manufacturing the electron emission device according to one embodiment of the present invention.
FIG. 7B illustrates a second phase of manufacturing the electron emission device according to one embodiment of the present invention.
FIG. 7C illustrates a third phase of manufacturing the electron emission device according to one embodiment of the present invention.
FIG. 7D illustrates a fourth phase of manufacturing the electron emission device according to one embodiment of the present invention.
FIG. 7E illustrates a fifth phase of manufacturing the electron emission device according to one embodiment of the present invention.
FIG. 7F illustrates a sixth phase of manufacturing the electron emission device according to one embodiment of the present invention.
FIG. 7G illustrates a seventh phase of manufacturing the electron emission device according to one embodiment of the present invention.

### DETAILED DESCRIPTION

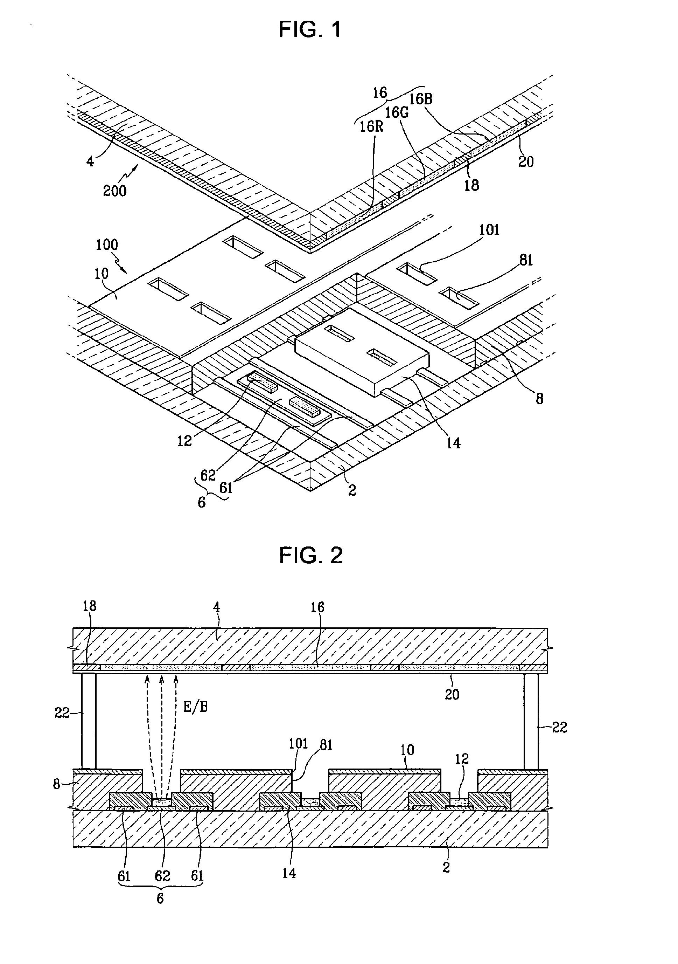

As shown in FIGs. 1 and 2, an electron emission device according to an embodiment of the present invention includes first and second substrates 2 and 4 arranged parallel to each other with a predetermined distance therebetween. A sealing member (not shown) is provided at the peripheries of the first and the second substrates 2 and 4 to seal them to each other. That is, the first and the second substrates 2 and 4, and the sealing member form a vacuum envelope.

An electron emission unit 100 is provided on a surface of the first substrate 2 to emit electrons toward the second substrate 4, and a light emission unit 200 is provided on a surface of the second substrate 4 facing the first substrate 2 to emit visible rays due to the electrons.

Cathode electrodes 6 are stripe-patterned on the first substrate 2 in a first direction of the first substrate 2, and an insulating layer 8 is formed on the entire surface of the first substrate 2 while covering the cathode electrodes 6. Gate electrodes 10 are stripe-patterned on the insulating layer 8 perpendicular to the cathode electrodes 6.

In this embodiment, when the crossed regions of the cathode and the gate electrodes 6 and 10 are defined as pixel regions, electron emission regions 12 are formed over the cathode electrodes 6 at the respective pixel regions. Openings 81 and 101 are formed at the insulating layer 8 and the gate electrodes 10 corresponding to the electron emission regions 12 while exposing the electron emission regions 12 on the first substrate 2.

The electron emission regions 12 are formed with a material emitting electrons when an electric field is applied thereto under the vacuum atmosphere, such as a carbonaceous material, and a nanometer-sized material. The electron emission regions 12 may be formed with carbon nanotube, graphite, graphite nanofiber, diamond, diamond-like carbon, C₆₀, silicon nanowire or a combination thereof, by way of screen-printing, direct growth, chemical vapor deposition, or sputtering.

In this embodiment, each cathode electrode 6 includes a pair of first electrodes 61 arranged parallel to each other and separated by a predetermined distance, and second electrodes 62 disposed between the first electrodes 61 by a distance. The first electrodes 61 are connected to electrode pad portions (not shown) at one side end to receive driving voltages therefrom. The second electrodes 62 each are separately located at the respective pixel regions, and one or more electron emission regions 12 are placed over each second electrode 62.

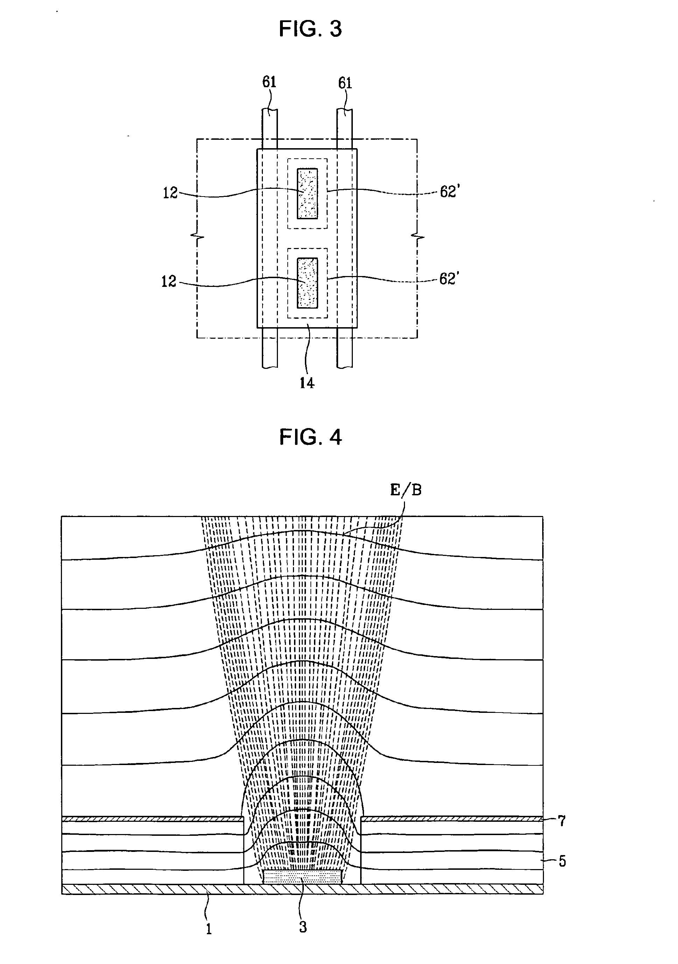

It is illustrated in the drawings that one second electrode 62 is located at each pixel region, and two electron emission regions 12 are placed over each second electrode 62. Alternatively, two or more second electrodes 62 may be located at each pixel region, and one or more electron emission regions 12 may be placed over each second electrode 62. It is illustrated in FIG. 3 that two second electrodes 62' are located at each pixel region, and one electron emission region 12 is placed over each second electrode 62'.

Referring again to FIGs. 1 and 2, with the process of forming the electron emission regions 12 to be explained later, the second electrodes 62 may be formed with a transparent oxide material, such as indium tin oxide (ITO), to transmit ultraviolet rays. The first electrodes 61 may be formed with a material having a specific resistance lower than that of the second electrodes 62, such as aluminum, molybdenum, silver, titanium, tungsten, chromium, and platinum.

Each second electrode 62 is electrically connected to a pair of first electrodes 61 via a resistance layer 14. The resistance layer 14 is separately provided at the respective pixel regions. That is, one resistance layer 14 is formed at each pixel region while covering the first and the second electrodes 61 and 62. The resistance layer 14 is formed with a conductive material having a specific resistance higher than that of the first and the second electrodes 61 and 62, for instance, a specific resistance of 10⁶-10¹²Ωcm.

The resistance layers 14 make the intensity of the electric current applied to the electron emission regions 12 uniform at the pixels arranged along the length of the cathode electrodes 6 when a voltage drop is made along the length of the cathode electrodes 6. With the resistance layers 14, the electron emission uniformity per pixel is enhanced, and the luminance is uniformly expressed.

In this embodiment, the resistance layer 14 surrounds the electron emission region 12 while contacting the lateral surface of the electron emission region 12. As all sides of the electron emission region 12 contact the second electrode 62 or the resistance layer 14 except for the top thereof, the contact resistance thereof with the cathode electrode 6 can be minimized, and in operation, electric fields are uniformly applied to the entire top surface thereof, thereby achieving uniform emission from that top surface.

Furthermore, in this embodiment, the top surface of the resistance layer 14 is placed on a plane higher than the top surface of the electron emission region 12. With the resistance layers 14, electric fields are formed around the electron emission regions 12 such that the electron beams can be well focused. That is, the resistance layer 14 functions as a focusing electrode for focusing the electrons emitted from the electron emission regions 12.

Phosphor layers 16 are formed on a surface of the second substrate 4 facing the first substrate 2 with red, green, and blue phosphor layers 16R, 16G and 16B spaced apart from each other by a distance, and black layers 18 are disposed between the respective phosphor layers 16 to enhance the screen contrast. An anode electrode 20 is formed on the phosphor layers 16 and the black layers 18 with a metallic material, such as aluminum.

The anode electrode 20 receives a high voltage required for accelerating the electron beams, and reflects the visible rays, radiated from the phosphor layers 16 toward the first substrate 2, back toward the second substrate 4, thereby heightening the screen luminance.

The anode electrode 20 may be formed with a transparent conductive material, such as ITO. In this case, the anode electrode is placed on a surface of the phosphor layers 16 and the black layers 18 facing the second substrate 4. The anode electrode may be formed on the entire area facing the second substrate 4, or patterned with a plurality of portions.

A plurality of spacers 22 are arranged between the first and the second substrates 2 and 4. The spacers 22 maintain a constant distance between the first and the second substrates 2 and 4, and support the vacuum envelope to prevent the breakage thereof. The spacers 22 are located corresponding to the black layers 18 such that they do not occupy the area of the phosphor layers 16.

The above-structured electron emission device is operated by applying predetermined voltages to the cathode electrodes 6, the gate electrodes 10, and the anode electrode 20. For instance, scan driving voltages are applied to any one of the cathode and the gate electrodes 6 and 10, and data driving voltages to the other electrode. A positive voltage of several hundred to several thousand volts is applied to the anode electrode 20.

Electric fields are formed around the electron emission regions 12 at the pixels where the voltage difference between the cathode and the gate electrodes 6 and 10 exceeds the threshold value, and electrons are emitted from the electron emission regions 12. The emitted electrons are attracted by the high voltage applied to the anode electrode 20, and collide against the corresponding phosphor layers 16, thereby causing them to emit light. In this process, with the electron emission device according to the present embodiment, the electron emission uniformity per pixel is enhanced by the resistance layers 14, and the beam spreading is minimized due to the electron beam focusing operation of the resistance layers 14.

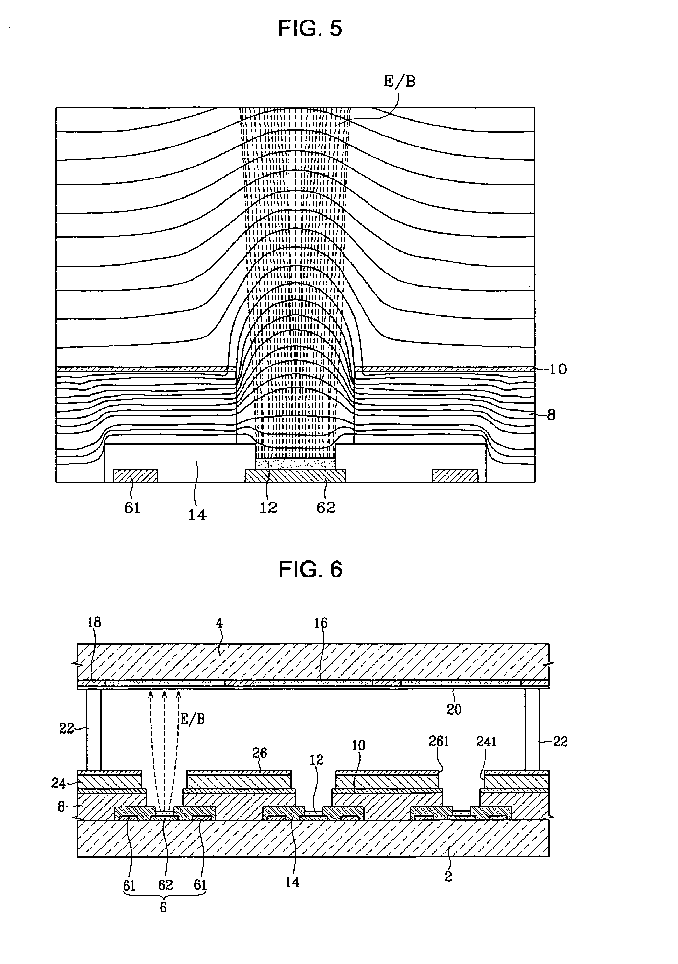

FIG. 4 is a schematic view of an electron emission device according to Comparative Example 1 where the cathode electrode 1 is stripe-shaped with no resistance layer, simulating the trajectories of emitting electron beams. FIG. 5 is a schematic view of an electron emission device according to Example 1, simulating the trajectories of emitting electron beams.

With the electron emission regions according to the Example 1 and the Comparative Example 1, the structural components were the same except for the shape of the cathode electrodes and the presence or absence of the resistance layers, and the simulations were made under the same voltage application condition.

With the electron emission device according to the Comparative Example 1, as shown in FIG. 4, equipotential lines are formed over the electron emission regions 3 such that they are concave toward the electron emission regions 3. With such a distribution of electric fields, when electrons are emitted from the electron emission regions 3, they are diffused with a relatively large diffusion angle. The reference numeral 5 of FIG. 4 indicates an insulating layer, and the reference numeral 7 indicates gate electrodes.

By contrast, with the electron emission device according to the Example 1, as shown in FIG. 5, equipotential lines are formed over the electron emission regions 12 such that they are convex toward the electron emission regions 12 due to the presence of the resistance layers 14. With additional distances away from the electron emission regions 12, the equipotential lines become flat and then concave toward the electron emission regions 12. With such a distribution of electric fields, the equipotential lines, which are convex toward the electron emission regions 12, significantly reduce the initial diffusion angle of the electron beams. Consequently, the electrons proceed toward the second substrate with excellent focusing capacity.

Consequently, the electrons emitted at a pixel do not tend to land on black layers or incorrect color phosphor layers at the pixel neighbors, but land on the correct color phosphor layer. Therefore, with the electron emission device according to this embodiment of the present invention, the abnormal light emitting is inhibited, and the color reproducibility and the color purity are enhanced, resulting in excellent screen image quality.

As shown in FIG. 6, an electron emission device according to another embodiment of the present invention basically has the same structural components as the electron emission device related to the embodiment discussed above, except that it further has a focusing electrode.

In this embodiment, when the insulating layer 8 disposed between the cathode and the gate electrodes 6 and 10 is defined as the first insulating layer, a second insulating layer 24 and a focusing electrode 26 are formed on the gate electrodes 10 and the first insulating layer 8. Openings 241 and 261 are respectively formed at the second insulating layer 24 and the focusing electrode 26. The openings 241 and 261 may be provided at the respective pixel regions with one-to-one correspondence, or a plurality of openings may be provided at each pixel region corresponding to the number of electron emission regions 12.

In operation, the focusing electrode 26 may receive a negative voltage of several to several tens of volts, and gives a repulsive force to the electrons passing the openings 261. Accordingly, with the electron emission device according to the present embodiment, the electrons once focused by the resistance layers 14 are re-focused while passing the openings 261 of the focusing electrode 26, thereby improving the electron beam focusing effect, compared to that related to the previous embodiment.

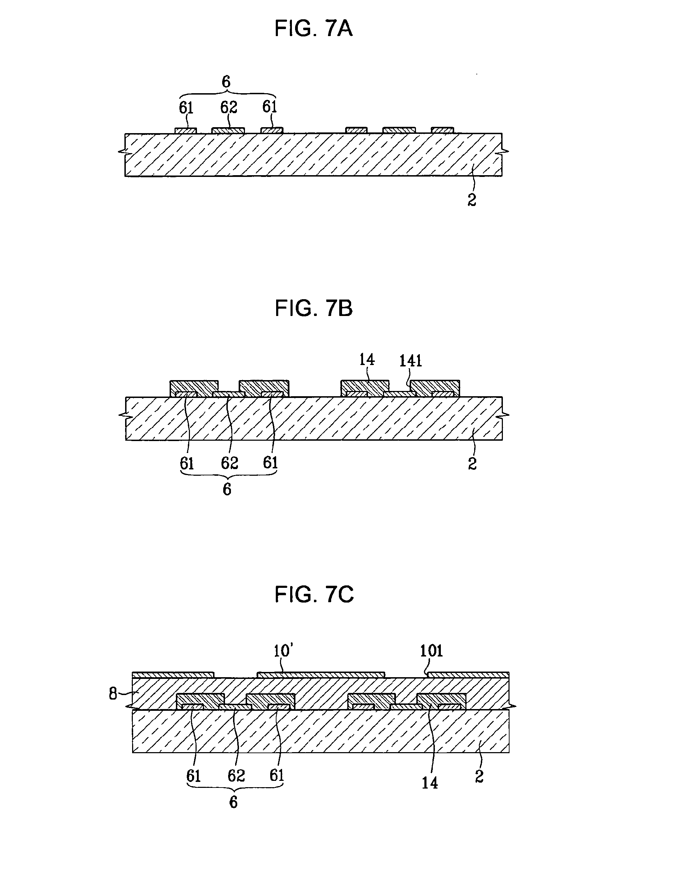

A method of manufacturing the electron emission device will be explained with reference to FIGs. 7A to 7G.

As shown in FIG. 7A, a conductive film is coated on a first substrate 2 with a transparent oxide material such as ITO, and patterned to thereby form second electrodes 62. The second electrodes 62 may be separately placed at the respective pixel regions defined on the first substrate 2.

First electrodes 61 are formed at both sides of the second electrodes 62 along a first direction on the first substrate 2. The first electrodes 61 may be formed with a material having a specific resistance lower than that of the second electrodes 62, such as aluminum, molybdenum, silver, titanium, tungsten, chromium, and platinum, by way of screen printing, vacuum deposition, sputtering, chemical vapor deposition, or plating. The second electrodes 62 and the first electrodes 61 may alternatively be formed in reverse order.

As shown in FIG. 7B, a resistance layer 14 is formed on the first and the second electrodes 61 and 62 per the respective pixels regions defined on the first substrate 2. The resistance layers 14 are patterned to thereby form openings 141 to the electron emission regions. In one embodiment, the resistance layers 14 are formed through applying a material with a specific resistance of 10⁶-10¹²Ωcm by screen printing, and drying it.

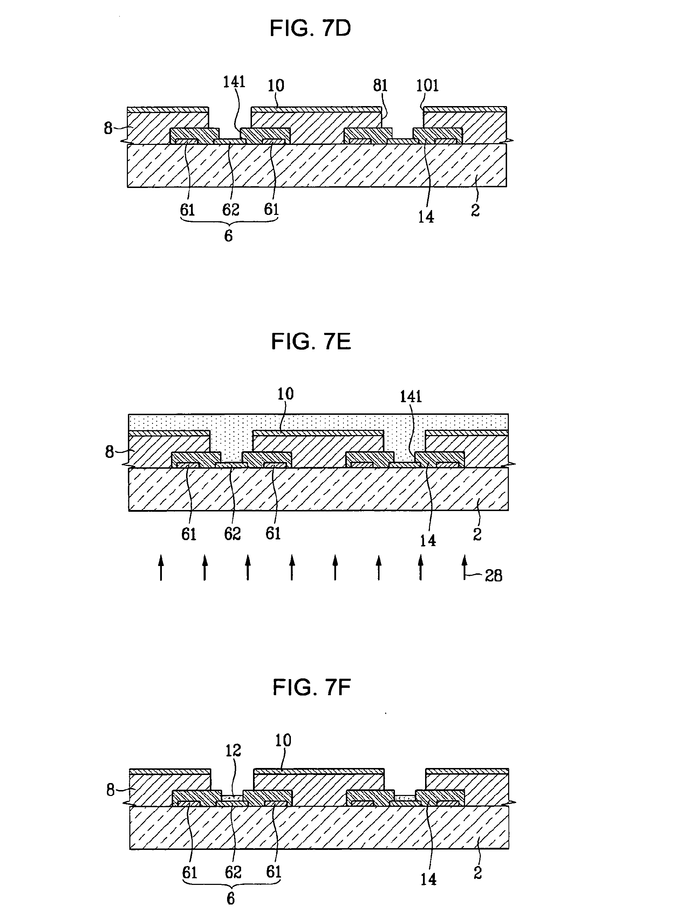

Thereafter, as shown in FIG. 7C, an insulating layer 8 is formed on the entire surface of the first substrate 2, and a conductive layer 10' is formed on the insulating layer 8, followed by patterning the conductive layer 10' to form openings 101. As shown in FIG. 7D, the portions of the insulating layer 8 exposed through the openings 101 of the conductive layer 10' are removed through etching to thereby form openings 81 in the insulating layer 8. The conductive layer 10' is patterned perpendicular to the first electrodes 61 to thereby form gate electrodes 10.

As shown in FIG. 7E, a paste-phased mixture containing an electron emission material and a photosensitive material is applied onto the entire surface of the first substrate 2, and ultraviolet rays 28 are illuminated thereto from the backside of the first substrate 2 to selectively harden the mixture filled within the openings 141 of the resistance layers 14. The non-hardened mixture is removed through developing, and the hardened mixture is dried and fired, thereby forming electron emission regions 12 shown in FIG. 7F. At this time, the intensity of ultraviolet rays and the time of illumination are properly controlled such that the electron emission regions 12 have a height lower than the resistance layers 14.

With the backside light exposure technique, the mixture is hardened beginning from the surface of the second electrodes 62. The electron emission regions 12 are thus well attached to the cathode electrodes 6. In addition to the screen printing, the electron emission regions 12 may be formed through direct growth, chemical vapor deposition, or sputtering.

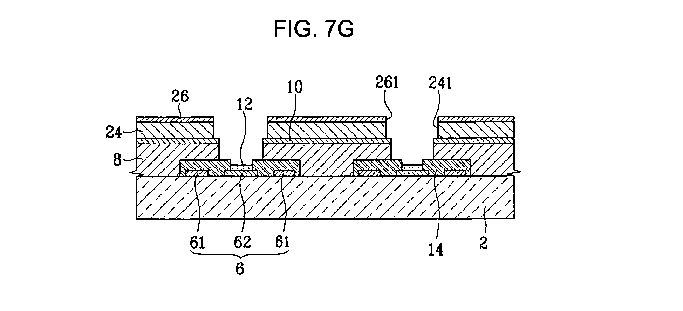

As shown in FIG. 7G, when the insulating layer 8 disposed between the cathode and the gate electrodes 6 and 10 is defined as the first insulating layer, a second insulating layer 24 and focusing electrodes 26 are formed on the gate electrodes 10 and the first insulating layer 8 before the formation of the electron emission regions 12, and openings 261 and 241 are formed at the focusing electrode 26 and the second insulating layer 24, followed by forming the electron emission regions 12 on the second electrodes 62 in the above-described way. Consequently, an electron emission device with a focusing electrode 26 according to the embodiment shown in FIG. 6 is completed.

## Claims

1. An electron emission device comprising:
a first substrate (2);
a second substrate (4) facing the first substrate (2) and separated therefrom by a predetermined distance;
cathode electrodes (6), each comprising first electrodes (61) formed on the first substrate, and second electrodes (62) spaced apart from the first electrodes;
electron emission regions (12) formed on the second electrodes;
resistance layers (14) interconnecting the first electrodes and the second electrodes;
an insulating layer (8) positioned over the resistance layers (14) and the cathode electrodes; and
gate electrodes (10) formed over the insulating layer,
**characterised in that** the resistance layers (14) surround the electron emission regions (12).

2. The electron emission device of claim 1, wherein the first electrodes are provided as a pair of first electrodes, and the second electrodes are disposed between the pair of first electrodes.

3. The electron emission device of claim 1, wherein the second electrodes are located at pixel regions defined on the first substrate, and one or more of the electron emission regions are formed on the second electrodes.

4. The electron emission device of claim 1, wherein two or more of the second electrodes are provided at each pixel region defined on the first substrate, and one ore more of the electron emission regions are formed on each second electrodes.

5. The electron emission device of claim 1, wherein the second electrodes are formed with a transparent conductive oxide layer.

6. The electron emission device of claim 5, wherein the first electrodes have a specific resistance lower than that of the second electrodes.

7. The electron emission device of claim 6, wherein the first electrodes are formed with a material selected from the group consisting of aluminum, molybdenum, silver, titanium, tungsten, chromium, and platinum.

8. The electron emission device of claim 1, wherein the resistance layers are separately provided at respective pixel regions defined on the first substrate.

9. The electron emission device of claim 1, wherein the resistance layers contact a lateral surface of the electron emission regions.

10. The electron emission device of claim 1, wherein the resistance layers have a specific resistance of 10⁶-10¹²Ωcm.

11. The electron emission device of claim 1, wherein the electron emission regions are formed with a material selected from the group consisting of carbon nanotube, graphite, graphite nanofiber, diamond, diamond-like carbon, C₆₀, and silicon nanowire.

12. The electron emission device of claim 1, further comprising focusing electrodes (26) positioned over the gate electrodes and being electrically insulated from the gate electrodes (10).

13. The electron emission device of claim 1, further comprising phosphor layers (16) formed on a surface of the second substrate facing the first substrate, and an anode electrode (20) formed on a surface of the phosphor layers.

14. The electron emission device of claim 1, wherein a thickness of the resistance layers is larger than that of the electron emission regions such that a top surface of the resistance layers is placed on a plane higher than a top surface of the electron emission regions.

15. A method of manufacturing an electron emission device, comprising:
(a) forming a pair of first electrodes (61) on a first substrate (2) with a metallic material, and forming second electrodes (62) between the pair of first electrodes with a transparent conductive oxide material to thereby form a cathode electrode (6);
(b) forming a resistance layer (14) on the pair of first electrodes (61) and the second electrodes (62), and forming openings (241, 261) in the resistance layer such that the openings partially expose the surface of the second electrodes (62);
(c) forming an insulating layer (8) and gate electrodes (10) on the cathode electrodes (6) and the resistance layers (14) such that the insulating layer and gate electrodes have openings, respectively; and
(d) forming electron emission regions (12) on the second electrodes within the openings in the resistance layers.

16. The method of claim 15, wherein the second electrodes are formed with ITO, and the first electrodes are formed with a material selected from the group consisting of aluminum, molybdenum, silver, titanium, tungsten, chromium, and platinum.

17. The method of claim 15, wherein the forming the electron emission regions comprises:
(a) applying a mixture of an electron emission material and a photosensitive material onto an entire surface of the first substrate;
(b) illuminating the mixture with ultraviolet rays from a backside of the first substrate to harden the mixture filled within the openings in the resistance layers; and
(c) thereafter, removing the mixture that is not hardened through developing, and drying and firing a remaining mixture.

18. The method of claim 15, wherein a thickness of the electron emission regions (12) is thinner than that of the resistance layers (14) such that a top surface of the resistance layers is placed on a plane higher than a top surface of the electron emission regions.

## Patentansprüche

1. Elektronenemissionsvorrichtung, aufweisend:
ein erstes Substrat (2);
ein zweites Substrat (4), das dem ersten Substrat (2) zugewandt ist und mit einem vorbestimmten Abstand von diesem getrennt ist;
Kathodenelektroden (6), wobei jede Kathodenelektrode (6) erste Elektroden (61), die auf dem ersten Substrat ausgebildet sind, und zweite Elektroden (62), die von den ersten Elektroden beabstandet sind, aufweist;
Elektronenemissionsregionen (12), die auf den zweiten Elektroden ausgebildet sind;
Widerstandsschichten (14), die die ersten Elektroden und die zweiten Elektroden miteinander verbinden;
eine Isolierschicht (8), die über den Widerstandsschichten (14) und den Kathodenelektroden positioniert ist; und
Gate-Elektroden (10), die über der Isolierschicht angeordnet sind,
**dadurch gekennzeichnet, dass** die Widerstandsschichten (14) die Elektronenemissionsregionen (12) umgeben.

2. Elektronenemissionsvorrichtung nach Anspruch 1, wobei die ersten Elektroden als ein Paar erster Elektroden bereitgestellt werden und die zweiten Elektroden zwischen dem Paar erster Elektroden angeordnet sind.

3. Elektronenemissionsvorrichtung nach Anspruch 1, wobei die zweiten Elektroden an auf dem ersten Substrat definierten Pixelregionen angeordnet sind, und wobei eine oder mehrere der Elektronenemissionsregionen auf den zweiten Elektroden ausgebildet ist/sind.

4. Elektronenemissionsvorrichtung nach Anspruch 1, wobei zwei oder mehr der zweiten Elektroden an jeder auf dem ersten Substrat definierten Pixelregion bereitgestellt werden, und wobei eine oder mehrere der Elektronenemissionsregionen auf jeder der zweiten Elektroden ausgebildet ist/sind.

5. Elektronenemissionsvorrichtung nach Anspruch 1, wobei die zweiten Elektroden mit einer transparenten, leitfähigen Oxidschicht ausgebildet sind.

6. Elektronenemissionsvorrichtung nach Anspruch 5, wobei die ersten Elektroden einen spezifischen Widerstand aufweisen, der geringer als derjenige der zweiten Elektroden ist.

7. Elektronenemissionsvorrichtung nach Anspruch 6, wobei die ersten Elektroden mit einem Material ausgebildet sind, das aus der Gruppe bestehend aus Aluminium, Molybdän, Silber, Titan, Wolfram, Chrom und Platin ausgewählt ist.

8. Elektronenemissionsvorrichtung nach Anspruch 1, wobei die Widerstandsschichten einzeln an entsprechenden auf dem ersten Substrat definierten Pixelregionen bereitgestellt werden.

9. Elektronenemissionsvorrichtung nach Anspruch 1, wobei die Widerstandsschichten mit einer Seitenfläche der Elektronenemissionsregionen in Kontakt stehen.

10. Elektronenemissionsvorrichtung nach Anspruch 1, wobei die Widerstandsschichten einen spezifischen Widerstand von 10⁶-10¹² Ωcm aufweisen.

11. Elelctronenemissionsvorrichtung nach Anspruch 1, wobei die Elektronenemissionsregionen mit einem Material ausgebildet sind, das aus der Gruppe bestehend aus Kohlenstoff-Nanoröhren, Graphit, Graphit-Nanofasern, Diamant, diamantartigem Kohlenstoff, C₆₀ und Silizium-Nanodrähten ausgewählt ist.

12. Elektronenemissionsvorrichtung nach Anspruch 1, weiterhin aufweisend Fokussierelektroden (26), die über den Gate-Elektroden positioniert sind und gegenüber den Gate-Elektroden (10) elektrisch isoliert sind.

13. Elektronenemissionsvorrichtung nach Anspruch 1, weiterhin aufweisend Phosphorschichten (16), die auf einer Oberfläche des zweiten Substrats, die dem ersten Substrat zugewandt ist, ausgebildet sind, sowie eine Anodenelektrode (20) die auf einer Oberfläche der Phosphorschichten ausgebildet ist.

14. Elektronenemissiorlsvorrichtung nach Anspruch 1, wobei eine Dicke der Widerstandsschichten größer als die Dicke der Elektronenemissionsregionen ist, derart, dass eine Oberseite der Widerstandsschichten in einer Ebene liegt, die höhergelegen als eine Oberseite der Elektronenemissionsregianen ist.

15. Verfahren zur Herstellung einer Elektronenemissionsvorrichtung, aufweisend:
(a) Ausbildung eines Paares erster Elektroden (61) auf einem ersten Substrat (2) mit einem metallischen Material, und Ausbildung zweiter Elektroden (62) zwischen dem Paar erster Elektroden mit einem transparenten, leitfähigen Oxidmaterial, so dass auf diese Weise eine Kathodenelektrode (6) ausgebildet wird;
(b) Ausbildung einer Widerstandsschicht (14) auf dem Paar erster Elektroden (61) und auf den zweiten Elektroden (62), und Ausbildung von Öffnungen (241, 261) in der Widerstandsschicht derart, dass die Öffnungen die Oberfläche der zweiten Elektroden (62) teilweise freilegen;
(c) Ausbildung einer Isolierschicht (8) und von Gate-Elektroden (10) auf den Kathodenelektroden (6) und den Widerstandsschichten (14) derart, dass die Isolierschicht und die Gate-Elektroden jeweils Öffnungen aufweisen; und
(d) Ausbildung von Elektronenelnissiansregionen (12) auf den zweiten Elektroden in den Öffnungen in den Widerstandsschichten.

16. Verfahren nach Anspruch 15, wobei die zweiten Elektroden mit ITO ausgebildet werden und die ersten Elektroden mit einem Material ausgebildet werden, das aus der Gruppe bestehend aus Aluminium, Molybdän, Silber, Titan, Wolfram, Chrom und Platin ausgewählt ist.

17. Verfahren nach Anspruch 15, wobei die Ausbildung der Elektronenemissionsregionen aufweist:
(a) Aufbringen einer Mischung aus einem Elektronenemissions-material und einem photoempfindlichen Material auf einer gesamten Oberfläche des ersten Substrats;
(b) Bestrahlung der Mischung von einer Rückseite des ersten Substrats aus mit ultravioletten Strahlen zum Härten der in die Öffnungen in den Widerstandsschichten gefüllten Mischung;
(c) anschließendes Entfernen der nicht gehärteten Mischung durch Entwickeln, sowie Trocknen und Brennen des verbliebenen Materials.

18. Verfahren nach Anspruch 15, wobei eine Dicke der Elektronenemissionsregionen (15) kleiner als die Dicke der Widerstandsschichten (14) ist, derart, dass eine Oberseite der Widerstandsschichten in einer Ebene liegt, die höhergelegen als eine Oberseite der Elektronenemissionsregionen ist.

## Revendications

1. Dispositif d'émission d'électrons comportant :
un premier substrat (2) ;
un second substrat (4) faisant face au premier substrat (2) et séparé de celui-ci par une distance prédéterminée ;
des électrodes de cathode (6), comprenant chacune des premières électrodes (61) formées sur le premier substrat et des secondes électrodes (62) espacées des premières électrodes ;
des régions (12) d'émission d'électrons formées sur les secondes électrodes ;
des couches (14) à résistance interconnectant les premières électrodes et les secondes électrodes ;
une couche isolante (8) positionnée au-dessus des couches à résistance (14) et des électrodes de cathode ; et
des électrodes de grille (10) formées sur la couche isolante,
**caractérisé en ce que** les couches (14) à résistance entourent les régions (12) d'émission d'électrons.

2. Dispositif d'émission d'électrons selon la revendication 1, dans lequel les premières électrodes sont prévues sous la forme d'une paire de premières électrodes, et les secondes électrodes sont disposées entre la paire de premières électrodes.

3. Dispositif d'émission d'électrons selon la revendication 1, dans lequel les secondes électrodes sont placées à des régions de pixels définies sur le premier substrat, et une ou plusieurs des régions d'émission d'électrons sont formées sur les secondes électrodes.

4. Dispositif d'émission d'électrons selon la revendication 1, dans lequel deux ou plus des secondes électrodes sont prévues à chaque région de pixels définie sur le premier substrat, et une ou plusieurs des régions d'émission d'électrons sont formées sur chaque seconde électrode.

5. Dispositif d'émission d'électrons selon la revendication 1, dans lequel les secondes électrodes sont formées avec une couche d'oxyde conducteur transparent.

6. Dispositif d'émission d'électrons selon la revendication 5, dans lequel les premières électrodes ont une résistance spécifique inférieure à celle des secondes électrodes.

7. Dispositif d'émission d'électrons selon la revendication 6, dans lequel les premières électrodes sont formées avec une matière choisie dans le groupe constitué de l'aluminium, du molybdène, de l'argent, du titane, du tungstène, du chrome et du platine.

8. Dispositif d'émission d'électrons selon la revendication 1, dans lequel les couches à résistance sont prévues séparément en des régions de pixels respectives définies sur le premier substrat.

9. Dispositif d'émission d'électrons selon la revendication 1, dans lequel les couches à résistance sont en contact avec une surface latérale des régions d'émission d'électrons.

10. Dispositif d'émission d'électrons selon la revendication 1, dans lequel les couches à résistance ont une résistance spécifique de 10⁶ à 10¹² Ωcm.

11. Dispositif d'émission d'électrons selon la revendication 1, dans lequel les régions d'émission d'électrons sont formées avec une matière choisie dans le groupe constitué d'un nanotube de carbone, de graphite, d'une nanofibre de graphite, de diamant, de carbone analogue à du diamant, de C₆₀ et d'un nanofil de silicium.

12. Dispositif d'émission d'électrons selon la revendication 1, comportant en outre des électrodes (26) de focalisation positionnées au-dessus des électrodes de grille et isolées électriquement des électrodes de grille (10).

13. Dispositif d'émission d'électrons selon la revendication 1, comportant en outre des couches (16) de luminophore formées sur une surface du second substrat faisant face au premier substrat, et une électrode d'anode (20) formée sur une surface des couches de luminophore.

14. Dispositif d'émission d'électrons selon la revendication 1, dans lequel l'épaisseur des couches à résistance est plus grande que celle des régions d'émission d'électrons afin qu'une surface de dessus des couches à résistance soit placée sur un plan plus élevé que celui d'une surface de dessus des régions d'émission d'électrons.

15. Procédé de fabrication d'un dispositif d'émission d'électrons, comprenant :
(a) la formation d'une paire de premières électrodes (61) sur un premier substrat (62) avec une matière métallique, et la formation de secondes électrodes (62) entre la paire de premières électrodes avec une matière à oxyde conducteur transparent pour former ainsi une électrode de cathode (6) ;
(b) la formation d'une couche à résistance (14) sur la paire de premières électrodes (61) et sur les secondes électrodes (62), et la formation d'ouvertures (241, 261) dans la couche à résistance afin que les ouvertures mettent partiellement à nu la surface des secondes électrodes (62) ;
(c) la formation d'une couche isolante (8) et d'électrodes de grille (10) sur les électrodes (6) de cathode et les couches à résistance (14) afin que la couche isolante et les électrodes de grille aient des ouvertures, respectivement ; et
(d) la formation de régions (12) d'émission d'électrons sur les secondes électrodes à l'intérieur des ouvertures dans les couches à résistance.

16. Procédé selon la revendication 15, dans lequel les secondes électrodes sont formées avec de l'ITO (oxyde d'étain et d'indium), et les premières électrodes sont formées avec une matière choisie dans le groupe constitué de l'aluminium, du molybdène, de l'argent, du titane, du tungstène, du chrome et du platine.

17. Procédé selon la revendication 15, dans lequel la formation des régions d'émission d'électrons comprend :
(a) l'application d'un mélange d'une matière d'émission d'électrons et d'une matière photosensible sur toute la surface du premier substrat ;
(b) l'illumination du mélange avec des rayons ultraviolets depuis un côté arrière du premier substrat pour faire durcir le mélange remplissant les ouvertures dans les couches à résistance ; et
(c) ensuite, l'enlèvement du mélange qui n'a pas durci au développement, et le séchage et la cuisson du mélange restant.

18. Procédé selon la revendication 15, dans lequel l'épaisseur des régions (12) d'émission d'électrons est inférieure à celle des couches à résistance (14) afin qu'une surface de dessus des couches à résistance soit placée sur un plan plus élevé que celui d'une surface de dessus des régions d'émission d'électrons.
